# EUROPEAN PATENT APPLICATION

(11) **EP 4 521 542 A1**
(43) Date of publication of application: **12.03.2025**
(21) Application number: 23195418.1
(22) Date of filing: 05.09.2023
(51) Int. Cl.: H01M 50/503, H01M 50/517, H01M 50/521, H01M 50/213

(54) **BATTERY CELL FIXTURE AND BATTERY MODULE**

(71) Applicant: Röchling Automotive SE, 68165 Mannheim (DE)
(72) Inventor: Ganthaler, Christoph, 21056 Naturno BZ (IT)
(74) Representative: Ullrich & Naumann PartG mbB

(57) **Abstract**

A battery cell fixture (112) is disclosed, wherein a plurality of battery cells (114) are supportable by the battery cell fixture (112) in a predefined relative position to each other. The battery cell fixture (112) comprises:
- two electrical connection portions (116),
- at least two busbars (118) configured for, in case the battery cells (114) are supported in the battery cell fixture (112), electrically contacting at least one of the battery cell's electrodes (120) such that a current is transmittable via the busbars (118) from the electrodes (120) to the electrical connection portions (116), and
- at least one plastic frame element (122) generated by at least partially overmolding at least one of the at least two busbars (118).

Further, a method of manufacturing a battery cell fixture (112) is disclosed. Furthermore, a battery module (110) and a method of manufacturing a battery module (110) are disclosed.

## Description

### Technical Field

The invention relates to a battery cell fixture and a method of manufacturing a battery cell fixture. Further, the invention relates to a battery module and a method of manufacturing a battery module. The devices and methods according to the present invention may generally be applied in the field of electrical power storage, such as in the field of electrical and/or electrochemical energy storage, e.g. as used in electrically powered entities. Specifically, the invention may be applied in the field of electro mobility, such as in fuel cell, hybrid and/or electric vehicles, e.g. in cars and/or trucks. Other applications however are feasible.

### Background art

Battery cell fixtures are typically used for structuring battery modules and packs and/or for providing stability to batteries within the battery modules and/or battery packs. Such battery packs and modules generally also comprise means for electrically contacting the batteries.

Common electrically contacting means, such as busbars, are provided as stand-alone components, e.g. manufactured independently from other components of the battery packs and/or modules, that need to be mounted and/or fixed to the battery pack and/or module separately.

CN 104115308 A describes a cell contacting arrangement for an energy storage module having a plurality of electrochemical storage cells, each storage cell having at least two electric connection terminals. Said arrangement comprises: a carrier plate which can be placed on the energy storage module, several cell connectors which are inserted or integrated into the carrier plate for contacting the connection terminal, a cable harness for contacting the cell connector, and a separate cable harness support which can be placed on the carrier plate for receiving the cable harness.

Despite the advantages involved in using stand-alone components, several technical challenges remain. Thus, mounting and/or fixing contacting means in a separate production step, either automatically or even by hand, requires time and resources. In the current growing demand for battery packs and battery modules, time and resources are limited.

### Problem to be solved

It is therefore desirable to provide devices and methods, which address the above-mentioned shortcomings of known devices and methods. Specifically, a battery cell fixture, a battery module and their manufacturing methods shall be proposed, which allow for a simple assembly and manufacturing, while at the same time providing an efficient battery contacting.

### Summary

This problem is addressed by a battery cell fixture, a method of manufacturing a battery cell fixture, a battery module and a method of manufacturing a battery module with the features of the independent claims. Advantageous embodiments, which might be realized in an isolated fashion or in any arbitrary combinations, are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a battery cell fixture is proposed, wherein a plurality of battery cells are supportable by the battery cell fixture in a predefined relative position to each other, the battery cell fixture comprising two electrical connection portions and at least two busbars configured for, in case the battery cells are supported in the battery cell fixture, electrically contacting at least one of the battery cell's electrodes such that a current is transmittable via the busbars from the electrodes to the electrical connection portions. Further, the battery cell fixture comprises at least one plastic frame element generated by at least partially overmolding at least one of the at least two busbars.

The term "battery cell fixture" as used herein is a broad term and is to be given its ordinary and customary meaning to a person of ordinary skill in the art and is not to be limited to a special or customized meaning. The term specifically may refer, without limitation, to an element and/or object configured for providing structure and/or stability to one or more batteries, particularly in a battery pack and/or in a battery module. The battery cell fixture may specifically be configured for supporting and/or holding, e.g. mechanically fixating, for example within its fixture structure, a plurality of battery cells in a predefined relative position to each other, e.g. by at least partially encircling and/or enclosing each of the battery cells. In particular, a contour and/or form of the battery cell fixture may correspond to the contour and/or form of the battery cells that are supposed to be supported and/or held within the battery cell fixture. As an example, the battery cell fixture may be configured for providing support to the battery cells, similar to a dish basket supporting dishes in a dish washer.

The term "predefined relative position" as used herein is a broad term and is to be given its ordinary and customary meaning to a person of ordinary skill in the art and is not to be limited to a special or customized meaning. The term specifically may refer, without limitation, to a pre-set and/or given physical arrangement between at least two objects and/or entities. The preset relative position of at least two objects, such as a plurality of battery cells, may particularly refer to the physical arrangement of the two objects, e.g. of the plurality of battery cells, with respect to each other, which has been specified in the past. In particular, a distance and/or tilt between each of the plurality of battery cells may have been pre-set and/or predefined, for example in an arbitrary data set. Such as data set comprising the predefined relative position may be stored and/or provided in a computer readable file, for example in one or more of a 2D- or 3D-file format. In particular, the battery cells being supportable by the battery cell fixture in a predefined relative position may refer to the arrangement of the batteries within the battery cell fixture, wherein a distance between the battery cells and/or a tilt or alignment of the battery cells with respect to each other is set.

The term "electrical connection portion" as used herein is a broad term and is to be given its ordinary and customary meaning to a person of ordinary skill in the art and is not to be limited to a special or customized meaning. The term specifically may refer, without limitation, to a physical appendage or protrusion of at least one object configured for physically connecting and/or touching at least one other object in order to establish an electrical connection to the other object. In particular, the two electrical connection portions of the battery cell fixture may refer to two physical appendages and/or protrusions of the battery cell fixture configured for being contacted by an electrical consumer. As an example, the two electrical connection portions of the battery cell fixture may be or may comprise the two electrical contacts of a battery module and/or battery pack for which the battery cell fixture is configured to provide structure and/or stability. The electrical connection portion may particularly comprise an electrically conductive material, such as a metal material, e.g. copper, brass, aluminum, and/or one or more of their alloys.

The term "busbar" as used herein is a broad term and is to be given its ordinary and customary meaning to a person of ordinary skill in the art and is not to be limited to a special or customized meaning. The term specifically may refer, without limitation, to an electrical conductor configured for power distribution. The busbar may particularly be or may comprise at least one electrically conductive material and may, as an example, have a flat shape.

However, in principle, any arbitrary form may be possible for the busbar, as long as there is a physical, network-like connection allowing uninterrupted current transmission.

The term "plastic frame element" as used herein is a broad term and is to be given its ordinary and customary meaning to a person of ordinary skill in the art and is not to be limited to a special or customized meaning. The term specifically may refer, without limitation, to an arbitrary object comprising polymeric material and being configured for enclosing, in at least one dimension, another object, i.e. one battery cell of the plurality of battery cells. In particular, the plastic frame element may be or may comprise at least one rigid mechanical structure and/or holder generated by a molding process, specifically by an overmolding process. As an example, the plastic frame element may comprise at least one polymeric material. In particular, the plastic frame element may be generated by at least partially overmolding at least one of the at least two busbars of the battery cell fixture. As used herein, the term "overmolding" may specifically, without limitation, refer to a process of shaping and/or casting a pliable material at least partially around an insert or inlay, e.g. around the at least one busbar as an insert. In particular, the overmolding may refer to a process of first shaping and/or forming the polymeric material while in a liquid and/or pliable state, e.g. at least partially around the busbar, by using a mold and/or matrix and then hardening and/or setting the polymeric material.

In particular, the busbars may be connected to the plastic frame element by a form fit connection. Specifically, the busbar and/or the plastic frame element may comprise an interlocking form and/or shape, i.e. physically interlocking with each other, such that a separation of their connection may be only possible by physically destructing at least one of the busbar and the plastic frame element.

The at least one of the at least two busbars may comprise one or more of an undercut, e.g. an incision or recess; a protrusion; a cutout, e.g. a though hole or a tapered hole; and an activated/preprocessed surface by laser treatments or chemicals. Specifically, the at least one busbar may comprise one or more of the undercut, the protrusion, the cutout and the activated and/or preprocessed surface, for, by overmolding the busbar, generating the form fit connection with the plastic frame element.

The plastic frame element may encircle at least one of the at least two busbars, specifically all of the busbars, in at least one plane. Specifically, the plastic frame element may be generated by fully overmolding the at least one busbar in at least one plane, e.g. such that the busbar may be fully enclosed in the at least one plane, e.g. in at least one dimension, by the plastic frame element.

The battery cell fixture may comprise at least two plastic frame elements, wherein each of the plastic frame elements may be generated by at least partially overmolding one of the at least two busbars. As an example, each of the at least two plastic frame elements may encircle at least one of the at least two busbars in at least one plane.

The electrical connection portions may be arranged on an outer side of the battery frame fixture, such as to be accessible from the outer side for external connections. In particular, the electrical connection portions may be arranged on an outer surface of the battery frame fixture, such as on an exterior surface, for example to be accessible and/or reachable from outside of the battery frame fixture, e.g. to allow electrically connecting an electrical consumer to the electrical connection portions.

In particular, the electrical connection portions may be one of separate elements of the battery cell fixture electrically connected to the busbars. Alternatively, the electrical connection portions may be part of the busbars, i.e. endings of the busbars. Thus, as an example, each of the two electrical connection portions may be an appendage or protrusion of exactly one of the at least two busbars.

The busbars, at least from one side, may be accessible, i.e. through the plastic frame element, from an outer side of the battery cell fixture. As an example, at least one side of each of the busbars may be accessible from outside of the battery frame fixture. Thus, on at least one side of the battery cell fixture, the busbars may form an outer surface of the battery cell fixture. In particular, such an accessibility may particularly be beneficial for performing at least one welding process on the busbars, e.g. automatically and/or by hand, after insertion of the battery cells into the battery cell fixture. For example, by welding, the busbars may be materially connected to the electrodes of the battery cells.

At least one busbar may comprise at least one material selected from the group consisting of: steel; copper; gold; graphite; aluminum; nickel; silver; and one or more of their alloys.

The plastic frame element may comprise at least one material selected from the group consisting of: a thermoplastic material, a Polypropylene (PP), a Polyamide (PA), a thermosetting material, and an elastomer.

The battery cells may be selected from the group consisting of: a cylindrical battery cell, a prismatic battery cell, and a pouch battery cell. Thus, as an example, the plurality of battery cells, which supportable in the battery frame fixture in a predefined relative position to each other, may all be either cylindrical battery cells, prismatic battery cells or pouch battery cells.

In a further aspect of the present invention, a method of manufacturing a battery cell fixture as disclosed herein is proposed. The method comprises the following steps, which may be performed in the given order. Still, a different order is possible. The method may comprise additional steps which are not mentioned. It is further possible to perform one or more or all of the method steps repeatedly. Further, two or more of the method steps may be performed simultaneously or in a timely overlapping fashion.

The method of manufacturing a battery cell fixture comprises the following steps:
a) providing the at least two busbars and the two electrical connection portions;
b) generating the plastic frame element by at least partially overmolding the at least two busbars in at least one overmolding process.

In particular, the method of manufacturing a battery cell fixture is configured for manufacturing the battery cell fixture as described above or as further outlined below. Thus, for possible definitions and options, reference may be made to the description of the battery cell frame as disclosed herein.

In yet a further aspect of the present invention, a battery module is proposed. The battery module comprises a plurality of battery cells and at least one battery cell fixture as described herein. Thus, for possible definitions and options, reference may be made to the description of the battery cell frame as described above or as further outlined below. In the battery module, the plurality of battery cells are supported by the at least one battery cell fixture, such that the battery cells are arranged in a predefined relative position to each other within the at least one battery cell fixture and the at least two busbars are electrically contacting the battery cell's electrodes such that a current is transmittable via the busbars from the electrodes to the electrical connection portions.

The term "battery module" as used herein is a broad term and is to be given its ordinary and customary meaning to a person of ordinary skill in the art and is not to be limited to a special or customized meaning. The term specifically may refer, without limitation, to an assembly of multiple battery cells, specifically predefined number of battery cells, combined into at least one frame, specifically a plurality of frames, configured for protecting the battery cells from external influences. In particular, the battery module may be a battery protecting installable entity.

In yet a further aspect of the present invention, a method of manufacturing a battery module is proposed. The method comprises the following steps, which may be performed in the given order. Still, a different order is possible. The method may comprise additional steps which are not mentioned. It is further possible to perform one or more or all of the method steps repeatedly. Further, two or more of the method steps may be performed simultaneously or in a timely overlapping fashion.

The method of manufacturing a battery module comprises the following steps:
i) providing a battery cell fixture as described herein;
ii) providing a plurality of battery cells;
iii) positioning the battery cells in the battery cell fixture;
iv) welding the battery cell's electrodes and the busbars, such that an electrical connection between the battery cells and the two electrical connections are established.

The proposed devices and methods provide a large number of advantages over known devices and methods of similar kind. In particular, the devices and methods according to the present application may allow for a time and resource saving production of battery modules and/or battery packs. In particular, the proposed method and devices may allow for less individual parts, e.g. in the battery cell frame and the battery module. This may specifically reduce complexity of the assembly, thereby possibly reducing costs in parts production and assembly process.

Furthermore, the proposed devices and methods may, compared to known devices and methods have a narrower built. In particular, the devices and methods according to the present application may allow for a reduced overall height of the battery module and/or the battery pack.

Summarizing and without excluding further possible embodiments, the following embodiments may be envisaged:
Embodiment 1. A battery cell fixture, wherein a plurality of battery cells are supportable by the battery cell fixture in a predefined relative position to each other, the battery cell fixture comprising:
   - two electrical connection portions,
   - at least two busbars configured for, in case the battery cells are supported in the battery cell fixture, electrically contacting at least one of the battery cell's electrodes such that a current is transmittable via the busbars from the electrodes to the electrical connection portions, and
   - at least one plastic frame element generated by at least partially overmolding at least one of the at least two busbars.
Embodiment 2. The battery cell fixture according to the preceding embodiment, wherein the busbars are connected to the plastic frame element by a form fit connection.
Embodiment 3. The battery cell fixture according to the preceding embodiment, wherein at least one of the at least two busbars comprises one or more of an undercut, e.g. an incision or recess; a protrusion; a cutout, e.g. a though hole or a tapered hole; and an activated/preprocessed surface by laser treatments or chemicals.
Embodiment 4. The battery cell fixture according to any one of the preceding embodiments, wherein the plastic frame element encircles at least one of the at least two busbars, specifically all of the busbars, in at least one plane.
Embodiment 5. The battery cell fixture according to the any one of the preceding embodiments, wherein the battery cell fixture comprises at least two plastic frame elements, wherein each of the plastic frame elements is generated by at least partially overmolding one of the at least two busbars.
Embodiment 6. The battery cell fixture according to the preceding embodiment, wherein each of the at least two plastic frame elements encircle at least one of the at least two busbars in at least one plane.
Embodiment 7. The battery cell fixture according to any one of the preceding embodiments, wherein the electrical connection portions are arranged on an outer side of the battery frame fixture, such as to be accessible from the outer side for external connections.
Embodiment 8. The battery cell fixture according to the preceding embodiment, wherein the electrical connection portions are one of separate elements of the battery cell fixture electrically connected to the busbars or part of the busbars, i.e. endings of the busbars.
Embodiment 9. The battery cell fixture according to any one of the preceding embodiments, wherein the busbars, at least from one side, are accessible, i.e. through the plastic frame element, from an outer side of the battery cell fixture.
Embodiment 10. The battery cell fixture according to any one of the preceding embodiments, wherein at least one busbar comprises at least one material selected from the group consisting of: steel; copper; gold; graphite; aluminum; nickel; silver; and one or more of their alloys.
Embodiment 11. The battery cell fixture according to any one of the preceding embodiments, wherein the plastic frame element comprises at least one material selected from the group consisting of: a thermoplastic material, a Polypropylene (PP), a Polyamide (PA), a thermosetting material, and an elastomer.
Embodiment 12. The battery cell fixture according to any one of the preceding embodiments, wherein the battery cells are selected from the group consisting of: a cylindrical battery cell; a prismatic battery cell; a pouch battery cell.
Embodiment 13. A method of manufacturing a battery cell fixture according to any one of the preceding embodiments, wherein the method comprises:
   a) providing the at least two busbars and the two electrical connection portions;
   b) generating the plastic frame element by at least partially overmolding the at least two busbars in at least one overmolding process.
Embodiment 14. A battery module comprising a plurality of battery cells and at least one battery cell fixture according to any one of the preceding embodiments referring to a battery cell fixture, wherein the plurality of battery cells are supported by the at least one battery cells fixture, such that the battery cells are arranged in a predefined relative position to each other within the at least one battery cell fixture and the at least two busbars are electrically contacting the battery cell's electrodes such that a current is transmittable via the busbars from the electrodes to the electrical connection portions.
Embodiment 15. A method of manufacturing a battery module according to the preceding embodiment, wherein the method comprises:
   i) providing a battery cell fixture according to any one of the preceding embodiments referring to a battery cell fixture;
   ii) providing a plurality of battery cells;
   iii) positioning the battery cells in the battery cell fixture;
   iv) welding the battery cell's electrodes and the busbars, such that an electrical connection between the battery cells and the two electrical connections are established.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figures 1 and 2: show an embodiment of a battery module with an embodiment of a battery cell fixture in a side section view (Figure 1) and in a bottom section view (Figure 2);
- Figure 3: shows an embodiment of a battery module in a partial bottom view;
- Figures 4 and 5: show an embodiment of a battery cell fixture in a perspective view (Figure 4) and in a partial bottom view (Figure 5);
- Figure 6: shows an embodiment of a part of a battery cell fixture in a perspective view;
- Figure 7: shows a flow chart of a method of manufacturing a battery cell fixture; and
- Figure 8: shows a flow chart of a method of manufacturing a battery module.

### Detailed description of the embodiments

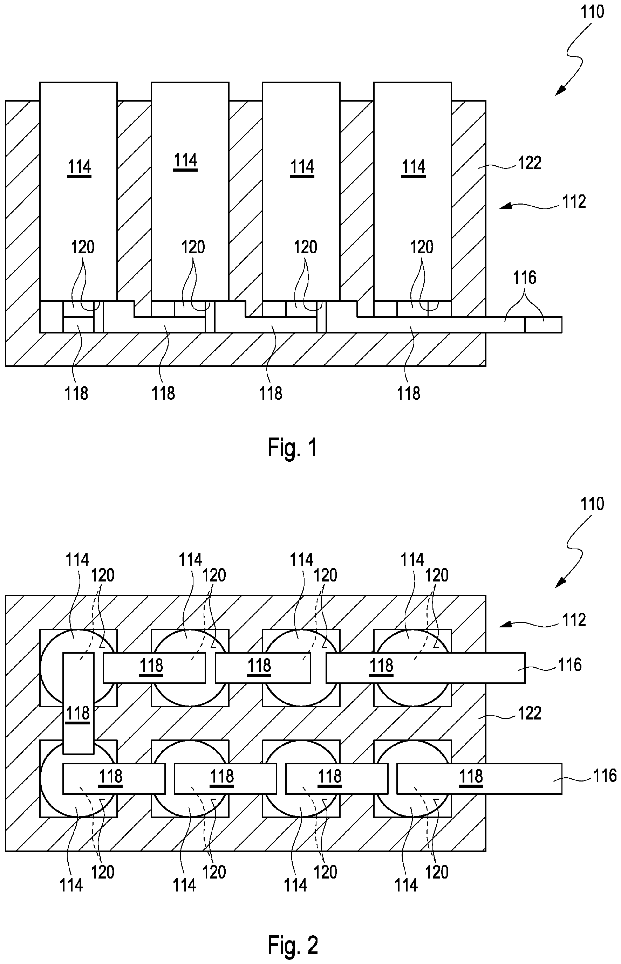

Figure 1 shows an embodiment of a battery module 110 with an embodiment of a battery cell fixture 112 in a side section view. The battery module 110 comprises a plurality of battery cells 114 and the battery cell fixture 112, wherein the plurality of battery cells 114 are supported by the battery cell fixture 112, such that the battery cells 114 are arranged in a predefined relative position to each other within the battery cell fixture 112. The battery cell fixture 112 comprises two electrical portions 116 and at least two busbars 118 electrically contacting the battery cell's electrodes 120 such that a current is transmittable via the busbars 118 from the electrodes 120 to the electrical connection portions 116. The battery cell fixture 112 further comprises at least one plastic frame element 122 generated by at least partially overmolding at least one of the at least two busbars 118. Figure 2 shows the same embodiments as Figure 1, but in a bottom section view.

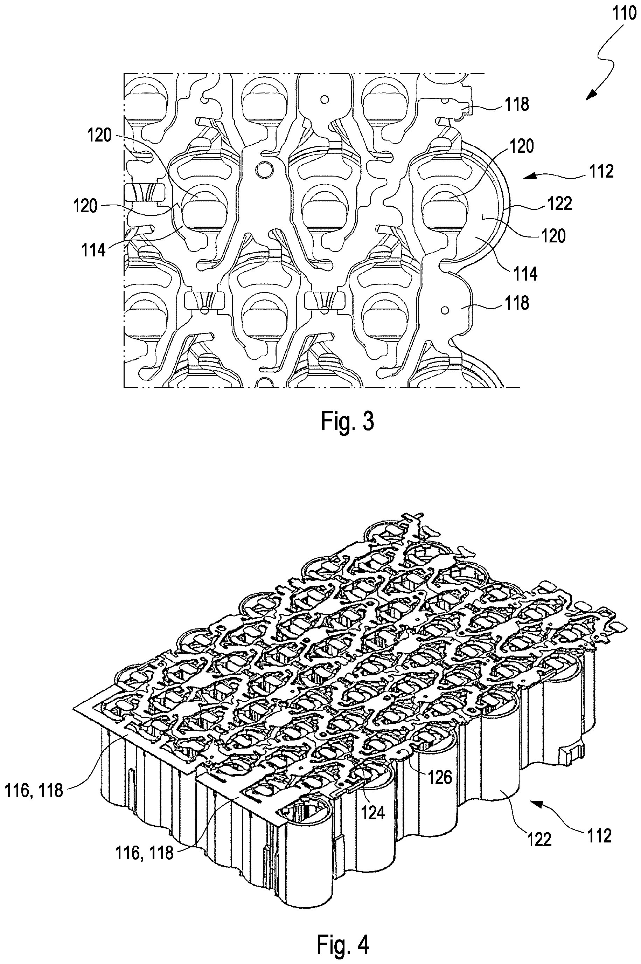

In a partial bottom view, Figure 3 illustrates an embodiment of a battery module 110 different from the embodiment illustrated in Figures 1 and 2. In the embodiment illustrated in Figure 3, the electrical connection portions 116 are not visible.

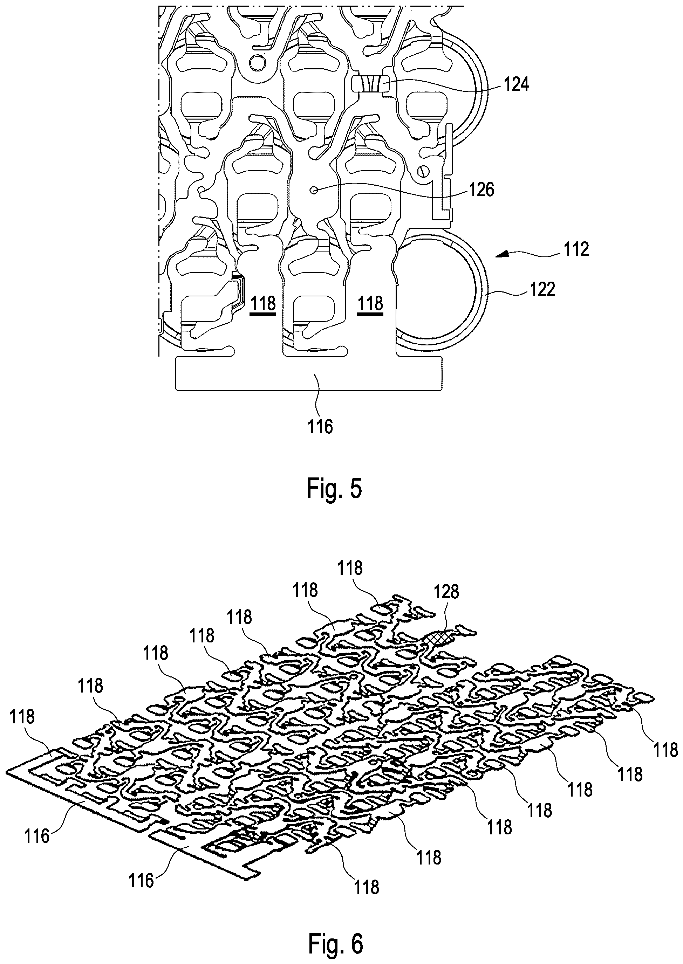

In Figures 4 and 5, an embodiment of a battery cell fixture 112 is illustrated in a perspective view (Figure 4) and in a partial bottom view (Figure 5). In the battery cell fixture 112, the busbars 118 may be connected to the plastic frame element 122 by a form fit connection. For that purpose, the busbars 118 may comprise at least one undercut or cutout, such as a recess 124 and/or a through hole 126. Thee plastic frame element 122 may specifically encircle at least one of the busbars 118 in at least one plane, as exemplarily illustrated around the recess 124 of the busbar 118 in both Figures 4 and 5. The busbars 118 may, at least from one side, be accessible from an outer side of the battery cell fixture 112, such as for being able to perform for example a welding process. As an example, in the welding process, the busbars 118 may be materially connected, i.e. welded, to their respective electrodes 120 of the battery cells 114. This may, for example, increase stability of the battery module 110 and/or increase an amount of current transferrable between the electrode 120 and the busbar 118.

The electrical connection portions 116 may be arranged on an outer side of the battery frame fixture 112, such as to be accessible from the outer side of the battery cell fixture 112 and even of the battery module 110 for external connections, e.g. for connecting an electrical consumer to the battery module 110. For example to power the electrical consumer by using the battery module 110. At least one of the electrical connection portions 116 may be a separate element of the battery cell fixture 112 electrically connected to the busbars 118, as exemplarily illustrated in Figure 5. Alternatively, at least one of the electrical connection portions 116 may be a part of the busbars 118, such as for example an end of at least one of the busbars 118, as exemplarily illustrated in Figure 4.

Figure 6 shows an embodiment of a part of a battery cell fixture 112 in a perspective view. Specifically, a plurality of busbars 118 may be illustrated. As an example, at least one busbar 118 may comprise a preprocesses surface 130, such as a laser treated surface, e.g. comprising a micro structure, for, when generating the plastic frame element 122 by overmolding the busbar 118 at least partially with the material of the plastic frame element 122, connecting the busbar 118 and the plastic frame element 122 by a form fit connection.

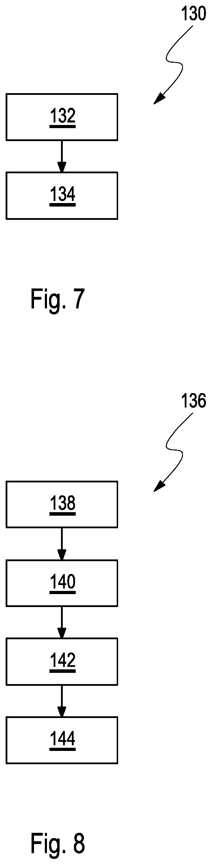

Figure 7 illustrates a flow chart of a method 130 of manufacturing a battery cell fixture 112. The method 130 comprises the following steps:
a) (denoted by reference number 132) providing the at least two busbars 118 and the two electrical connection portions 116;
b) (denoted by reference number 134) generating the plastic frame element 122 by at least partially overmolding the at least two busbars 118 in at least one overmolding process.

Figure 8 illustrates a flow chart of a method 136 of manufacturing a battery module 110. The method 136 comprises the following steps:
i) (denoted by reference number 138) providing a battery cell fixture 112 as described herein;
ii) (denoted by reference number 140) providing a plurality of battery cells 114;
iii) (denoted by reference number 142) positioning the battery cells 114 in the battery cell fixture 112;
iv) (denoted by reference number 144) welding the battery cell's electrodes 120 and the busbars 118, such that an electrical connection between the battery cells 114 and the two electrical connections 116 are established.

### List of reference numbers

- 110: battery module
- 112: battery cell fixture
- 114: battery cell
- 116: electrical portion
- 118: busbar
- 120: battery cell's electrode
- 122: plastic frame element
- 124: recess
- 126: through hole
- 128: preprocessed surface
- 130: method of manufacturing a battery cell fixture
- 132: step a)
- 134: step b)
- 136: method of manufacturing a battery module
- 138: step i)
- 140: step ii)
- 142: step iii)
- 144: step iv)

## Claims

1. A battery cell fixture (112), wherein a plurality of battery cells (114) are supportable by the battery cell fixture (112) in a predefined relative position to each other, the battery cell fixture (112) comprising:
- two electrical connection portions (116),
- at least two busbars (118) configured for, in case the battery cells (114) are supported in the battery cell fixture (112), electrically contacting at least one of the battery cell's electrodes (120) such that a current is transmittable via the busbars (118) from the electrodes (120) to the electrical connection portions (116), and
- at least one plastic frame element (122) generated by at least partially overmolding at least one of the at least two busbars (118).

2. The battery cell fixture (112) according to the preceding claim, wherein the busbars (118) are connected to the plastic frame element (122) by a form fit connection.

3. The battery cell fixture (112) according to the preceding claim, wherein at least one of the at least two busbars (118) comprises one or more of an undercut; a protrusion; a cutout; and an activated and/or preprocessed surface (128) by laser treatments or chemicals.

4. The battery cell fixture (112) according to any one of the preceding claims, wherein the plastic frame element (122) encircles at least one of the at least two busbars (118) in at least one plane.

5. The battery cell fixture (112) according to the any one of the preceding claims, wherein the battery cell fixture (112) comprises at least two plastic frame elements (122), wherein each of the plastic frame elements (122) is generated by at least partially overmolding one of the at least two busbars (118).

6. The battery cell fixture (112) according to the preceding claim, wherein each of the at least two plastic frame elements (122) encircle at least one of the at least two busbars (118) in at least one plane.

7. The battery cell fixture (112) according to any one of the preceding claims, wherein the electrical connection portions (116) are arranged on an outer side of the battery frame fixture (112), such as to be accessible from the outer side for external connections.

8. The battery cell fixture (112) according to the preceding claim, wherein the electrical connection portions (114) are one of separate elements of the battery cell fixture (112) electrically connected to the busbars (118) or part of the busbars (118).

9. The battery cell fixture (112) according to any one of the preceding claims, wherein the busbars (118), at least from one side, are accessible from an outer side of the battery cell fixture (112).

10. The battery cell fixture (112) according to any one of the preceding claims, wherein at least one busbar (118) comprises at least one material selected from the group consisting of: steel; copper; gold; graphite; aluminum; nickel; silver; and one or more of their alloys.

11. The battery cell fixture (112) according to any one of the preceding claims, wherein the plastic frame element (122) comprises at least one material selected from the group consisting of: a thermoplastic material, a Polypropylene (PP), a Polyamide (PA), a thermosetting material, and an elastomer.

12. The battery cell fixture (122) according to any one of the preceding claims, wherein the battery cells (114) are selected from the group consisting of: a cylindrical battery cell; a prismatic battery cell; a pouch battery cell.

13. A method of manufacturing a battery cell fixture (112) according to any one of the preceding claims, wherein the method comprises:
a) providing the at least two busbars (118) and the two electrical connection portions (116);
b) generating the plastic frame element (122) by at least partially overmolding the at least two busbars (118) in at least one overmolding process.

14. A battery module (110) comprising a plurality of battery cells (114) and at least one battery cell fixture (112) according to any one of the preceding claims referring to a battery cell fixture (112), wherein the plurality of battery cells (114) are supported by the at least one battery cell fixture (112), such that the battery cells (114) are arranged in a predefined relative position to each other within the at least one battery cell fixture (112) and the at least two busbars (118) are electrically contacting the battery cell's electrodes (120) such that a current is transmittable via the busbars (118) from the electrodes (120) to the electrical connection portions (116).
